# EUROPEAN PATENT APPLICATION

(11) **EP 0 962 473 A1**
(43) Date of publication of application: **08.12.1999**
(21) Application number: 98201851.7
(22) Date of filing: 04.06.1998
(51) Int. Cl.: C08F 293/00, C09D 153/00

(54) **Block polymer and powder-paint binder composition**

(71) Applicant: DSM N.V., 6411 TE Heerlen (NL)
(72) Inventor: Udding-Louwrier, Saskia, 3828 DB Hoogland (NL); Udding, Jan Henderikus, 3828 DB Hoogland (NL); Rietberg, Johan, 8042 NR Zwolle (NL)

(57) **Abstract**

The invention relates to an A-B-C block polymer formulated from an ethylenically unsaturated monomer, said A block and said C block being terminally disposed and said B block being interposed between said A block and said C block; said A block and said C block having crosslinkable functional groups, said B block being essentially free of reactive functional groups.

The polymer can be obtained through controlled radical polymerization in the presence of an initiator and a metal complex or a metal-containing compound.

The invention also relates to a powder paint composition comprising said A-B-C block polymer.

## Description

The invention relates to a block polymer and relates also to a powder-paint binder composition comprising a polymer based on an ethylenically unsaturated monomer and optionally a crosslinker.

These polymers based on ethylenically unsaturated monomers, such as for example polyacrylates, can be obtained through radical polymerization, in which functional groups are randomly distributed across the polymer. Such polymers are described in Paint and Surface Coatings (R. Lambourne, pp. 68-74, 1987, Ellis Horwood Limited), the complete disclosure of which is incorporated herein by reference. Powder coatings obtained after curing of a powder paint composition containing a binder composition which includes a polyacrylate and a crosslinker are known to be too brittle and too sensitive to damage upon exposure to solvents.

Therefore it is the object of the present invention to provide a curable powder paint binder composition comprising an ethylenically unsaturated monomer based polymer, which results in powder coatings which exhibit good mechanical properties and a superior resistance to chemicals.

The invention is characterized in that the powder paint binder composition comprises an A-B-C block polymer formulated from an ethylenically unsaturated monomer, said A block and said C block being terminally disposed and said B block being interposed between said A block and said C block; said A block and said C block having crosslinkable functional groups, said B block being essentially free of reactive functional groups.

The functional groups are located at the end blocks A and C of the polymer. The combined weight percent of the end blocks A and C is generally less than 30 wt.% of the total weight of the A-B-C- block copolymer.

After curing of the powder paint composition comprising the binder composition according to the invention the powder coating has a good resistance to yellowing and to weather influences, and exhibits good flow behaviour, good storage stability, good resistance to chemicals, a high gloss, high scratch resistance and good mechanical properties.

The invention also relates to the A-B-C block polymer having functional end groups.

According to a preferred embodiment of the invention the polymer has been obtained through controlled radical polymerization in the presence of an initiator and a metal complex or a metal-containing compound.

The method of producing the A-B-C block polymer for use in a curable powder-paint binder composition, can comprise the steps of:
a) providing a mixture, said mixture comprising an effective amount of an initiator and an effective amount of a catalyst;
b) adding a first functionalized monomer to said mixture, said first functionalized monomer comprising for example an ethylenically unsaturated mono- or dicarboxylic acid derivative;
c) polymerizing said first functionalized monomer at a suitable temperature and pressure to effectively polymerize said first functionalized monomer to form A block of said A-B-C block polymer;
d) adding a non-functionalized monomer to said mixture, said non-functionalized monomer having essentially no reactive functional groups which are crosslinkable to said first functionalized monomer, and polymeriziging said non-functionalized monomer to form B block of said A-B-C block polymer;
e) adding a second functionalized monomer to said mixture, said second functionalized monomer having no functional groups which are crosslinkable to said non-functionalized monomer, and polymerizing said second functionalized monomer to obtain C block of said A-B-C block polymer,
   thereby obtaining said A-B-C block polymer, wherein said A block and said C block of said A-B-C block polymer are terminally disposed and said B block is interposed between said A block and said C block, said B block being essentially free of reactive functional groups which are crosslinkable with those on said A block and said C block.

The location of the functional groups in the end blocks A and C is contrary to the random distribution of functional units across the whole of poly(meth)acrylates conventionally used in powder-paint binder compositions.

The block B contains essentially no reactive or crosslinkable functional groups. Block B may however include various monomer units such as, for example, alkyl(meth)acrylates and styrene.

Examples of suitable functional monomers in blocks A and C include (meth)acrylic acid, (meth)acrylic acid esters, glycidyl (meth)acrylate and hydroxyethyl (meth)acrylate. The functional monomers in A and C may be the same or different. Preferably, the monomers in blocks A and C are epoxy, carboxyl and hydroxyl groups.

Suitable ethylenically unsaturated monomers include, for example, styrene, acrylonitrile and ethylenically unsaturated mono- or dicarboxylic acid derivatives. These derivatives include preferably esters, of (C₃-C₆) monoethylenically unsaturated monocarboxylic acids, such as for example (meth)acrylic acid and crotonic acid, and (C₄-C₆) monoethylenically unsaturated dicarboxylic acids such as, for example, maleic acid, maleic anhydride, itaconic acid and fumaric acid.

(Meth)acrylic acid ester is preferred.

Suitable (meth)acrylic acid derivatives include, for example, (meth)acrylic acid, methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, isodecyl (meth)acrylate, benzyl (meth)acrylate and hydroxyalkyl (meth)acrylates such as hydroxyethyl and hydroxypropyl (meth)acrylate and/or glycidyl esters or glycidyl ethers of alkyl (meth)acrylates.

Acrylate-based polymers containing different reactive functional groups can be used in the binder composition according to the invention.

Examples of suitable functional groups are carboxyl groups, epoxy groups, anhydride groups, hydroxyl groups, acetoacetonate groups and combinations thereof.

The degree of branching of the polymer is generally between 2 and 6. Branching refers to the extensions of the polymer chain(s) attached to the polymer backbone.

The molecular weight (Mn) of the polymer is usually higher than 800 and is preferably higher than 1500. To obtain good flow behaviour at temperatures between 100°C and 200°C, the molecular weight (Mn) is usually lower than about 10,000 and preferably lower than about 7000.

The polydispersity is generally lower than 2 and usually lies between 1.1 and 1.8. The polydispersity (Mw/Mn) has been determined with the aid of size exclusion chromatography using a viscosimeter detector.

The Tg of the polyacrylate is generally between about 30°C and about 120°C. Relatively larger amounts of crosslinker can be used in the binder composition if the Tg lies at the upper limit of this range. To obtain an optimum storage stability, the Tg is preferably higher than 50°C. With a view to the processing of the polymer the Tg is preferably lower than 100°C.

The viscosity of the polyacrylate is generally between 100 and 8000 dPas (measured at 160°C using a Rheometric Plate-Plate).

The polymerization according to the invention generally takes place at temperatures between 60°C and 180°C and preferably between 80°C and 170°C. The pressure is generally between 1 and 10 atmospheres. The polymerization is carried out under an inert atmosphere.

Suitable examples of initiators used in producing the A-B-C block polymer include halogen containing compounds, for example, α-halo-substituted carboxylic (C₁-C₆)alkyl esters.

Suitable halogen atoms e.g. halo-subsituents are for example chloro and bromo. Examples of such initiators are α-(mono-, di-, or tri-)chloro or bromo acetic methyl ester, α-(mono- or di-)chloro- or bromo propionic methyl ester, α-chloro or bromo butyric methyl ester and α-chloro or bromo malonic dimethyl ester.

The initiators may also be multi-functional, such as, for example, 4-vinyl benzyl chloride, α,α'-dibromo-p-xylene, α,α-dichloro-p-xylene, 2,4-mesitylene disulphonyl chloride, 1,3,5-tris(bromomethyl)benzene, tetrakis (bromomethyl)benzene, hexakis (bromomethyl)-benzene, 1,4-dibromo-2-butene, and esters of the aforementioned α-halogen-substituted carboxylic acids with diols and polyols such as, for example, the tri(dichloroacetic acid) ester of trimethylol propane.

Preferably dichloromethylacetate is used as the initiator.

The metals may be present in a compound with a covalent or ionic bond or in a complex with a coordination bond.

The metal containing compound or the metal complex may act as a catalyst.

Suitable metallic elements are Cu, Fe, Ag, Ti, W, U, Al, Mo, Pd, Ru, Rh and Ni.

Preferably Cu, Fe, Ru and Ni are used.

Preferably, the catalyst is a metal complex based on one or more metal ions or salts with exchangeable counterions and ligands.

The number of counterions lies between 0 and 6 and preferably between 1 and 4. In the case of tetravalent metals it is possible to use, for example, four monovalent counterions, two divalent counterions or a combination of a trivalent and a monovalent counterion. Preferably four monovalent counterions are used.

In the case of trivalent metals the number of counterions is between 1 and 3. Preferably three monovalent counterions are used.

Examples of suitable counterions include halides, preferably chloride and bromide, (C₁-C₂₀) alkoxides, preferably (C₁-C₈) alkoxide, (C₂-C₂₀) carboxylates, preferably (C₂-C₈) carboxylates, enolates, preferably of 2,4-pentanedione (acetylacetonates) and alkyl esters of malonic acid and acetyl acetic acid, phenolates, naphthenates, cresylates and mixtures of said counterions.

Suitable ligands include, for example, (substituted) bipyridines, pyridines, bi- and tridentate amines, mono-, bi- and tridentate phosphines, imines and nitriles.

Examples of suitable bipyridines include 2,2'-bipyridine and 4,4'-dialkyl-2,2'-bipyridine.

Examples of amines are tetramethylethylene diamine (TMEDA), tetramethylpropylene diamine and pentamethylene diethylene triamine.

Suitable phosphines include for example triphenylphosphine, 1,2-bis(diphenylphosphino)ethane, 1,3-bis(diphenylphosphino)propane, 1,4-bis(diphenylphosphino)butane, R(+)-2,2'-bis(diphenylphosphino)1,1-binaphthyl, S(-)2,2'-bis(diphenylphosphino)1,1-binaphthyl, PPh₃ and 1,2-bis(dimethylphosphino)ethene.

Suitable nitriles include for example acetonitrile and succinonitrile.

Suitable pyridines include for example pyridine, alkylpyridine, 2,2'-bipyridine, 4,4'dialkyl-2,2'-bipyridine, 2-pyridyl acetonitrile and 2,2':6',2'-terpyridine.

Suitable imines can be obtained by the reaction of salicylaldehyde with a compound containing nitrogen atoms. Preferably, the nitrogen compound is a polyamine such as, for example, ethylenediamine, cis-1,2-cyclohexanediamine, trans-1,2-cyclohexanediamine (racemic), [S,S]-trans-1,2-cyclohexanediamine, [R,R]-trans-1,2-cyclohexanediamine, N-methylbisethylenetriamine, triethylenetetraamine, 3,3'-diamino-N-methyldipropylamine, 1,2-phenylenediamine, 1,1,2,2,-tetramethylethylenediamine and propylene imine dendrimers.

It is also possible to use, for example, substituted o-hydroxybenzaldehydes instead of salicylaldehyde.

Suitable substituents include for example alkyl, aryl, halogen, nitrile, nitroxyl, dialkylphosphino, diaryiphosphino, pyridyl, aminoalkyl, aminoaryl, carboxyl, hydroxyl and carbonyl groups.

Optionally a small amount, for example between 0.001 and 2 mol.%, of metal salts can be added during the production of the A-B-C-block polymer. Examples of such salts include CuCl₂, CuBr₂ or FeCl₃.

The catalysts can also be applied to a carrier such as, for example, silica.

The controlled living radical polymerization may take place by bulk polymerization or by solvent polymerization in the presence of solvents such as, for example, toluene, acetonitrile, xylene, 1,2-dichloroethane, tert-butyl benzene, methyl ethyl ketone, dimethyl formamide, dimethyl sulphoxide, mesitylene, butyl acetate and benzene.

Controlled living radical polymerizations are described in J. Am. Chem. Soc. 1997, 119, 674-680, and in Macromolecules, 1995, 28, 7901-7910, the complete reference of which is incorporated herein by means of reference.

A preferred embodiment of producing the A-B-C block polymer comprises adding the functionalized monomer or a mixture of a functionalized monomer and a non-functionalized monomer to a mixture, consisting of the catalyst and the initiator, in a solvent. Suitable solvents include, for example, toluene, butyl acetate and methyl isobutyl ketone.

The amount of initiator used is between about 0.01 and about 10 mol.% relative to the monomers. The amount of catalyst used is between about 0.001 and about 10 mol.% relative to the monomers.

After the percentage of conversion of the functionalized monomer in block A has passed, for example, 90%, non-functionalized monomer B can be added.

After the percentage of conversion of the total amount of monomers A + B has passed for example, 85% funtionalized monomer C can be added.

Block A can also be formed by initiator with functional groups.

On completion of the polymerization metal salts and/or ligands can be removed via filtration over silica or washing with water.

A thermosetting powder-paint binder composition can contain more than 50 wt.% polymer and less than 50 wt.% crosslinker. In general more than 2 wt.% crosslinker is used although the use of less than 15 wt.% crosslinker is preferred. These amounts are defined as wt.% relative to the total amount the combined weight of the of polymer and crosslinker.

The crosslinker selected for use in the present invention is capable of reacting with the functional groups which are present in blocks A and C of the A-B-C block polymer.

Examples of suitable crosslinkers include triglycidyl isocyanurate (TGIC), polybisphenol-A epoxides, compounds containing (blocked) isocyanate groups, compounds containing β-hydroxyalkylamide groups, amino resins, crosslinkers containing acid groups and crosslinkers (as described in EP-A-600546) comprising at least one aliphatic branched or linear chain with an epoxy functionality containing 5-26 carbon atoms such as, for example, epoxidized oils.

The polyacrylates obtained according to the present process also offer the possibility of using a "full-acrylic" system. In this case an oligomer or polymer containing acrylate groups takes over the function of the crosslinker. As an example of such a system an acid-functional polyacrylate obtained via the living polymerization described above can be combined with a state of the art glycidyl methacrylate copolymer.

The curing reaction between the polymer and the crosslinker which results in the ultimate cured coating will be a function of the polymer and the crosslinker which is selected. This curing reaction can be effectuated, if desired, in the presence of an effective amount of catalyst. With the binder composition according to the invention it is possible to choose the desired curing time by adjusting the type and amounts of catalyst used and/or the curing agent. The importance of the ratio of the polymer and the crosslinker described above and of the amount of catalyst is explained in Misev, Powder Coatings, Chemistry and Technology pp. 174-223 (1991, John Wiley), the complete disclosure of which is incorporated herein by reference.

The preparation of powder-paint and the chemical curing reactions of powder-paint into cured coatings are described in general terms in, for example, Misev, Powder Coatings, Chemistry and Technology, pp. 44-54, p. 148 and pp. 225-226, the complete disclosure of which is incorporated herein by reference.

Optionally one or more other additives. Suitable for use in paints may also be used. Examples of suitable additives include pigments, fillers, degassing agents, flow agents, stabilizers and tribocharging improving agents. Suitable pigments include for example inorganic pigments, such as titanium dioxide, zinc sulphide, iron oxide and chromium oxide, and also organic pigments such as azo compounds. Suitable fillers include for example metal oxides, silicates, carbonates and sulphates.

Suitable stabilizers include for example primary and/or secondary antioxidants and UV stabilizers such as quinones, (sterically hindered) phenolic compounds, phosphonites, phosphites, thioethers and HALS compounds (hindered amine light stabilizers).

Examples of degassing agents include benzoin and cyclohexane dimethanol bisbenzoate. Examples of flow agents include polyalkylacrylates, fluorohydrocarbons and silicon oils. Suitable additives are for example additives to improve the tribo-charging properties, include for example sterically hindered tertiary amines.

Powder paints according to the invention can be applied to a susbtrate in the usual manner, for example by means of electrostatic spraying of the powder onto an earthed substrate and curing of the coating such as through exposure to heat at a suitable temperature for a sufficiently long period. The applied powder can for example be heated in a gas oven, an electric oven or with the aid of infrared radiation.

Thermosetting coatings of powder paint (coating) compositions intended for industrial applications are described further in general terms in Powder Coatings by Misev, pp. 141-173 (1991) the complete disclosure of which is incorporated herein by reference.

Compositions according to the present invention can be used in powder coatings intended for use on metal, wood, aluminium, paper and plastic substrates. Examples are industrial general-purpose finishing coatings, coatings for machinery and for example for cans, household and other small equipment. The coatings are also very suitable for use in the automotive industry for coating external and/or internal parts.

As is evident from for example "Resins and curing agents for thermosetting powder coatings" (by Kapilow and Sammel, Vol. 59, July 1987, pp. 39-47, Journal of Coatings Technology), coatings based on a solvent or water are not related to thermosetting powder paints, because powder paints must meet requirements relating to for example the binder's melting point, the rheological properties, the reactivity and the stability, which do not apply to "wet" coatings. However, if the molecular weight, the viscosity and the glass transition temperature of the polymers according to the invention are adjusted through the selection of the monomers, such polymers can surprisingly be used as starting compounds for solvent-based or water-based coatings.

In addition to the aforementioned A-B-C triblock copolymers, A-B-C polymers with several branches that are linked to one another via one or more branching points can also be made. The multifunctional initiators already described above can be used to this end during the preparation. These materials, too, may consist of one or more polymer blocks each consisting of various monomers. On account of their improved flow behaviour, the materials thus formed can be used as viscosity regulators in, for example, coatings and polymer mixtures. These mixtures may contain polymers based on monomers that can be cured with the aid of radicals such as, for example, styrene acrylonitrile, styrene or methyl (meth)acrylate. In addition, the relatively large number of terminal groups can be used to provide materials with improved adhesion properties. These materials moreover show improved UV and melting resistance in comparison with linear materials.

The invention will be further elucidated with reference to the following, non-limiting examples.

### Example I

### Preparation of a carboxyl-functional acrylate polymer

A mixture consisting of 14.1 g of 2,2'-bipyridine and 288 g of toluene was degassed and inertized with nitrogen. Next, 4.5 g of CuCl was added after which the mixture was heated to 105°C. Next, 15 g of dichloroacetic methyl ester, 31.5 g of methyl methacrylate and 27 g of tert.-butyl acrylate were added. The temperature was kept at 105°C. After 4 hours the tert.-butyl acrylate present had reacted. Next, 210 g of methyl methacrylate was added at 105°C. Subsequently, after 90% conversion, a mixture consisting of 27 g of tert.-butyl acrylate and 31.5 g of methyl methacrylate was added.

The reaction was continued for another 3 hours to bring about complete conversion. The solution was cooled and filtered. Toluene was removed through distillation and the product obtained, with a molecular weight Mn of 3250, was heated to 200°C, after which the tertiary butyl ester decomposed.

The carboxyl-functional polyacrylate obtained had an acid number of 52.4 mg of KOH/g of resin and a glass transition temperature of 92°C.

### Example II

### Preparation of an acrylate polymer

A mixture consisting of 1.562 g of 2,2'bipyridine and 50 g of toluene was degassed and inertized with nitrogen. Next, 0.496 g of CuCl was added, after which the mixture was heated to 105°C. Then 3.1 g of dichloroacetic tert-butyl ester and 50 g of methyl methacrylate were added.

The temperature was kept at 105°C. After 90% conversion 2.13 g of tert.-butyl acrylate was added. After 4 hours and 105°C complete conversion was realized. The solution was cooled and filtered. Toluene was removed through distillation and the product, with a molecular weight (Mn) of 3320, was heated to 200°C.

The carboxyl-functional polyacrylate obtained had an acid number of 52.4 mg of KOH/g of resin and a glass transition temperature of 93°C.

### Example III

### Preparation of a hydroxyl-functional acrylate polymer

940 acrylate polymer obtained according to Example I was dissolved in 500 g of butyl acetate. The solution was heated to 120°C, after which 2 g of catalyst was added. Next, 60 g of propylene oxide was dosed in 2 hours. After additional 3 hours afterreaction at 120°C butyl acetate was removed by vacuum distillation up to 180°C.

The polymer obtained had an acid number of <1 mg of KOH/g of resin and a hydroxyl value of 48 mg of KOH/g of resin. The polymer's glass transition temperature was 78°C.

### Examples IV-XII

### Powder coating composition

The polyacrylates obtained according to Examples I-III (Acrylate 1, Acrylate 2 and Acrylate 3, respectively, in Table 1) were mixed with a crosslinker as indicated in Table 1. This mixture was dosed to a kneader at 120°C. After the resin had melted completely, titanium dioxide was dispersed in the resin, after which the other additives were added. After cooling, the product obtained was reduced in size, pulverized and sieved to a maximum particle size of 90 mm. The powder-paint composition was electrostatically applied to an earthed metal substrate and was cured to a powder coating.

The curing conditions and properties obtained are shown in Table 2.

From this it can be concluded that powder coatings were obtained that possess the desired combination of elasticity, hardness and resistance to chemicals.

**Table 1**

| | IV | V | VI | VII | VIII | IX | X | XI | XII |
|---|---|---|---|---|---|---|---|---|---|
| Acrylate 1 | 167.3 | | | | | 167.3 | | | |
| Acrylate 1 | | 155.2 | | | | | 155.2 | | |
| Acrylate 1 | | | 179.5 | | | | | | |
| Acrylate 2 | | | | 167.3 | | | | | |
| Acrylate 2 | | | | | 155.2 | | | | |
| Acrylate 3 | | | | | | | | 180 | 160 |
| Flexol¹⁾ | 32.7 | | | 32.7 | | 32.7 | | | |
| Edenol D82²⁾ | | 44.8 | | | 44.8 | | 44.8 | | |
| TGIC³⁾ | | | 20.5 | | | | | | |
| Powderlink 1174⁴⁾ | | | | | | | | 20 | |
| Blocked isocyanate⁵⁾ | | | | | | | | | 40 |
| TiO₂ | 100 | 100 | 100 | 100 | 100 | | | 100 | 100 |
| Resiflow PV5 | 3 | 3 | 3 | 3 | 3 | 3 | 3 | 3 | 3 |
| Benzoin | 0.75 | 0.75 | 0.75 | 0.75 | 0.75 | 0.75 | 0.75 | 0.75 | 0.75 |
| TMG⁶⁾ | 1.5 | 1.5 | | 1.5 | 1.5 | 1.5 | 1.5 | | |
| DMBA⁷⁾ | | | 0.5 | | | | | | |

| | | | | | | | | | |
|---|---|---|---|---|---|---|---|---|---|
| ¹⁾: epoxidized linseed oil (Union Carbide) | | | | | | | | | |
| ²⁾: epoxidized soybean oil (Henkel) | | | | | | | | | |
| ³⁾: triglycidyl isocyanurate (CIBA) | | | | | | | | | |
| ⁴⁾: tetramethoxymethyl glycoluril (Cyanamid) | | | | | | | | | |
| ⁵⁾: tolonate HDT blocked with triazole | | | | | | | | | |
| ⁶⁾: tetramethylguanidine | | | | | | | | | |
| ⁷⁾: dimethylbenzyl amine | | | | | | | | | |

**Table 2**

| | IV | V | VI | VII | VIII | IX | X | XI | XII |
|---|---|---|---|---|---|---|---|---|---|
| Curing time¹⁾ | 15' | 15' | 10' | 15' | 15' | 15' | 15' | 15' | 15' |
| Hardness²⁾ | 192 | 187 | 208 | 180 | 188 | 178 | 190 | 212 | 202 |
| Impact resistance³⁾ | 60 | 100 | 120 | 80 | 40 | 140 | 100 | 120 | 100 |
| ESP⁴⁾ | >8 | >8 | >8 | >8 | >8 | >8 | >8 | >8 | >8 |
| Acetone rest⁵⁾ | >100 | >100 | >100 | >100 | >100 | >100 | >100 | >100 | >100 |

| | | | | | | | | | |
|---|---|---|---|---|---|---|---|---|---|
| ¹⁾: Curing temperature 200°C | | | | | | | | | |
| ²⁾: König pendulum hardness - DIN 53 157 | | | | | | | | | |
| ³⁾: Reverse impact test - ASTM-2794/69 | | | | | | | | | |
| ⁴⁾: Erichson slow penetration ISO 1520 - DIN 53156 | | | | | | | | | |
| ⁵⁾: Acetone double rubs | | | | | | | | | |

## Claims

1. A-B-C block polymer formulated from an ethylenically unsaturated monomer, said A block and said C block being terminally disposed and said B block being interposed between said A block and said C block; said A block and said C block having crosslinkable functional groups, said B block being essentially free of reactive functional groups.

2. Polymer according to Claim 1, characterized in that the combined weight percent of said A block and said C block is less than about 30 wt.% of said A-B-C block polymer.

3. Polymer according to any one of claims 1-2, characterized in that the polymer is a poly(meth)acrylate.

4. Polymer according to any one of claims 1-3 obtained through controlled radical polymerization in the presence of an initiator and a metal complex or a metal-containing compound.

5. Polymer according to claim 4, characterized in that the initiator is a halogen containing compound.

6. Polymer according to claim 5, characterized in that the initiator is an α-halogen-substituted carboxylic (C₁-C₆) alkyl ester.

7. Polymer according to any one of claims 4-6, characterized in that the metal complex is based on one or more metal ions with exchangeable counterions and ligands.

8. Polymer according to any one of claims 4-7, characterized in that the metal is Cu, Fe, Ru or Ni.

9. Polymer according to any one of claims 7-8, characterized in that the counterion is a halide, (C₁-C₂₀) alkoxide, a (C₂-C₂₀) carboxylate, an enolate, an alkyl ester of malonic acid and acetyl acetic acid, a phenolate, a naphthenate or a cresylate.

10. Polymer according to any one of claims 7-9, characterized in that the ligand is a (substituted) bipyridine, a pyridine, a bi- and tridentate amine, a mono-, bi- or tridentate phosphine, an imine or a nitrile.

11. Powder-paint binder composition comprising a polymer according to any one of claims 1-10 and optionally a crosslinker.

12. Powder paint containing a composition according to claim 11 and optionally pigment, catalyst, fillers and additives.

13. Powder coating based on a powder paint according to claim 12.

14. Entirely or partly coated substrate, characterized in that a powder coating according to claim 13 has been used as the coating.

15. Binder composition for solvent- or water-based coatings comprising a polymer according to any one of claims 1-10.

16. Coating composition comprising a binder composition according to claim 15.
